# EUROPÄISCHE PATENTSCHRIFT

(11) **EP 0 422 458 B1**
(45) Veröffentlichungstag und Bekanntmachung des Hinweises auf die Patenterteilung: **30.03.1994**
(21) Anmeldenummer: 90118631.2
(22) Anmeldetag: 28.09.1990
(51) Int. Cl.: G01B 7/02, F15B 15/28, B60G 17/015

(54) **Wegmesssystem**
Displacement transducer
Capteur de déplacement

(30) Priorität: 06.10.1989 DE 3933330; 19.09.1990 DE 4029633
(43) Veröffentlichungstag der Anmeldung: 17.04.1991
(73) Patentinhaber: ROBERT BOSCH GMBH, 70442 Stuttgart (DE)
(72) Erfinder: Schenk, René, Dipl.-Ing. (FH), D-7146 Tamm-Hohenstange (DE); Tischer, Michael, Dipl.-Ing. (FH), D-7101 Abstatt (DE)

(56) Entgegenhaltungen:
- DE-A- 2 836 000
- DE-A- 3 410 534
- DE-A- 3 420 666
- FR-A- 2 573 200
- GB-A- 2 201 788
- US-A- 4 406 999

## Beschreibung

### Stand der Technik

Die Erfindung betrifft ein Wegmeßsystem zum Erfassen einer Stellposition eines Körpers relativ zu einem anderen Körper nach der Gattung des unabhängigen Anspruchs 1. Es ist ein Wegmeßsystem durch die GB-A-2 201 788 bekannt geworden, bei dem ein Teil des Wegmeßsystems mit einem der Körper und ein anderer Teil des Wegmeßsystems mit dem anderen Körper verbunden sind und mit dem die Stellposition des einen Körpers gegenüber dem anderen Körper gemessen werden kann.

Bei dem durch die GB-A-2 201 788 bekannten Wegmeßsystem wird die Spule relativ zu einem elektrisch leitfähigen Material bewegt. Je mehr die Spule in das elektrisch leitfähige Material eintaucht, desto geringer wird die Induktivität der Spule. Hier ist die Induktivität der Spule ein Maß für die Stellposition des einen Körpers gegenüber dem anderen Körper. In dem elektrisch leitfähigen Material können Öffnungen mit gegenseitigem Abstand vorgesehen sein. Die Öffnungen dienen zur Verbesserung der Linearität des Meßsystems. Die Spule und das elektrisch leitfähige Material müssen länger sein als der zu messende Meßweg. Dies führt zu einer erheblichen Baulänge, welche in ausgefahrenem Zustand deutlich mehr als zweimal so lang ist wie der zu messende Meßweg.

Ein anderes bekanntes Wegmeßsystem ist ein sogenanntes induktives Wegmeßsystem. Der eine Teil des Wegmeßsystems umfaßt einen Anker, der vorzugsweise aus Weicheisen besteht, und der andere Teil des Wegmeßsystems umfaßt eine Spule. Die Spule muß deutlich länger sein als ein zu messender Meßweg, und der Anker muß ebenfalls deutlich länger sein als der Meßweg. Dadurch ergibt sich ein Wegmeßsystem, welches insgesamt sehr lang baut. Spule plus Anker sind über zweimal so lang wie der zu messende Meßweg. Der Anker beeinflußt eine Induktivität der Spule. Die Induktivität der Spule kann als Maß für die Stellposition des einen Körpers gegenüber dem anderen Körper verwendet werden. Je weiter der Anker in die Spule eintaucht, desto größer wird die Induktivität der Spule.

Die Druckschriften US-A-4 406 999 und FR-A-2 573 200 zeigen ebenfalls Meßsysteme, bei denen die Meßspule ebenfalls mindestens so lang sein muß wie der zu messende Meßweg, so daß auch diese Wegmeßsysteme sehr lang bauen. Bei der in der Figur 3 der FR-A-2 573 200 gezeigten Ausführung sind eine Primär- und eine Sekundärwicklung erforderlich, was die Baulänge zusätzlich verlängert.

Figur 2 der US-A-4 406 999 zeigt einen dreieckigen Schlitz in einem über dem Spulenkern angeordneten Rohr. Da der Schlitz gegenüber der Meßspule räumlich fixiert ist, muß die Meßspule mindesten so lang sein wie der zu messende Meßweg.

Die bekannten Wegmeßsysteme bauen also insgesamt wesentlich länger, insbesondere im ausgefahrenen Zustand, als der zu messende Meßweg, so daß ein Einbau der bekannten Wegmeßsysteme in einen Zylinder, insbesondere in einen Zylinder eines Stoßdämpfers, kaum möglich ist.

### Vorteile der Erfindung

Das eingangs genannte Wegmeßsystem mit dem kennzeichnenden Merkmal des Hauptanspruchs weist demgegenüber den Vorteil auf, daß sich an jeder Stelle des die Induktivität beeinflussenden, strukturierten Materials eine ganz spezielle Beeinflussung der Meßspule ergibt. Entlang des Meßweges beeinflußt jede Stelle des die Struktur besitzenden Materials die Meßspule in charakteristischer Weise jeweils anders. Diese Beeinflussung ist ein Maß für die Stellposition.

Weil die Meßspule deutlich kürzer als der Meßbereich ist, ergibt sich in vorteilhafter Weise ein besonders kurzes Wegmeßsystem, welches besonders leicht in einen Zylinder, insbesondere in einen Stoßdämpfer eingebaut werden kann. Der Zylinder baut durch das erfindungsgemäße Wegmeßsystem in vorteilhafter Weise nicht oder so gut wie nicht größer als ohne ein Wegmeßsystem.

Durch die in den abhängigen Ansprüchen aufgeführten Maßnahmen sind vorteilhafte Weiterbildungen und Verbesserungen des angegebenen Wegmeßsystems möglich.

Befindet sich das die Struktur besitzende Material auf einem Grundmaterial, das die Beeinflussung der Meßspule durch das die Struktur besitzende Material nicht oder nur wenig beeinflußt, so ergibt sich eine besonders einfache Fertigungsmöglichkeit für den Zylinder, wobei dessen Festigkeit durch das Wegmeßsystem nicht beeinflußt wird. Dies bietet den besonderen Vorteil, daß man z. B. die Position eines Kolbens im Inneren eines druckdichten Rohres, z. B.auch innerhalb eines Metallrohres, messen kann.

Ist das die Struktur besitzende Material ein besonders gut elektrisch leitendes Material, so ergibt sich vorteilhafterweise eine besonders hohe Meßempfindlichkeit des Wegmeßsystems, wenn auf der der Meßspule abgewandten Seite des die Struktur besitzenden Materials ein weiteres Material angeordnet ist, welches eine besonders hohe Permeabilität besitzt.

Umfaßt die Meßspule mindestens zwei in entgegengesetzter Richtung stromdurchflossene Spulen, so hat dies den Vorteil, daß selbst ein sehr starkes äußeres Magnetfeld oder äußeres elektrisches Feld keinen oder so gut wie keinen Einfluß auf das über die Meßspule erzielte Meßergebnis hat. Selbst eine Änderung der Stärke des von außen auf die Meßspule einwirkende Feld hat keinen Einfluß auf das Meßergebnis.

Die Trennwand zwischen den beiden Spulen sorgt in vorteilhafter Weise dafür, daß das Magnetfeld der einen Spule nicht oder höchst unwesentlich das Magnetfeld der jeweils andere Spule negativ beeinflussen kann.

Bei dem vorgeschlagenen Wegmeßsystem handelt es sich um ein Meßsystem, das zu jeder Zeit vorteilhafterweise einen Absolutwert liefert.

### Zeichnung

Ein Ausführungsbeispiel der Erfindung ist in der Zeichnung vereinfacht dargestellt und in der nachfolgenden Beschreibung näher erläutert. Es zeigen Figur 1 das bevorzugte Ausführungsbeispiel, die Figuren 2 bis 8 je eine besonders vorteilhafte Gestaltung des die Struktur besitzenden Materials, die Figur 9 eine besonders vorteilhafte Gestaltung einer Meßspule mit einem Kern in Seitenansicht und die Figur 10 eine besonders vorteilhaft ausgebildete Meßspule im Querschnitt.

### Beschreibung des Ausführungsbeispiels

Das erfindungsgemäße Wegmeßsystem läßt sich bei Einrichtungen anwenden, bei denen eine Stellposition eines Körpers relativ zu einem anderen Körper erfaßt werden soll. Je nach Stellposition des einen Körpers gegenüber dem anderen Körper erhält man eine bestimmte Induktivität in einer Spule und damit ein bestimmtes Meßsignal. Jeder Stellposition ist ein bestimmtes Meßsignal zugeordnet. Durch Auswertung dieser Meßsignale kann z. B. erfaßt werden, welchen Weg einer der Körper gegenüber dem anderen Körper zurückgelegt hat. Auch eine Relativgeschwindigkeit zwischen den beiden Körpern kann erfaßt werden.

Obwohl nicht allein darauf beschränkt, wurde im Ausführungsbeispiel der vorliegenden Patentanmeldung für das erfindungsgemäße Wegmeßsystem ein Stoßdämpfer als Anwendungsbeispiel gewählt.

Das in der Zeichnung dargestellte Ausführungsbeispiel zeigt einen sogenannten Einrohr-Stoßdämpfer 2. Aus Vereinfachungsgründen ist ein mittlerer Abschnitt des Stoßdämpfers 2 nicht dargestellt. Der Stoßdämpfer 2 umfaßt im wesentlichen einen Zylinder 4 mit einem Mantel 5, einer ersten Stirnseite 6 und mit einer zweiten Stirnseite 8, sowie einen Dämpferkolben 10 und eine Kolbenstange 12. Der Dämpferkolben 10 ist innerhalb des Zylinders 4 entlang einer inneren Mantelfläche 14 des Mantels 5 axial verschiebbar gelagert. Die Kolbenstange 12 ist mit ihrem einen Ende mit dem Dämpferkolben 10 verbunden und ragt mit ihrem anderen Ende durch die erste Stirnseite 6 über den Zylinder 4 hinaus. Eine an der ersten Stirnseite 6 vorgesehene Dichtung 15 dichtet einen Leckspalt zwischen der Stirnseite 6 und der Kolbenstange 12 ab. Das in axialer Richtung über den Zylinder 4 hinausragende Ende der Kolbenstange 12 ist mit einer ersten Masse 16 verbunden. Die zweite Stirnseite 8 des Zylinders 4 ist an einer zweiten Masse 18 angelenkt. Die erste Masse 16 ist beispielsweise ein Fahrzeugaufbau und die zweite Masse 18 ist z. B. eine Fahrzeugachse. Ein Innenraum des Zylinders 4 wird durch den Dämpferkolben 10 in einen ersten Arbeitsraum 21 und in einen zweiten Arbeitsraum 22 unterteilt. Der erste Arbeitsraum 21 befindet sich auf der ersten Stirnseite 6 zugewandten Seite des Dämpferkolbens 10 und der zweite Arbeitsraum 22 befindet sich auf der zweiten Stirnseite 8 zugewandten Seite des Dämpferkolbens 10. In der Zeichnung befindet sich der erste Arbeitsraum 21 oberhalb und der zweite Arbeitsraum 22 unterhalb des Dämpferkolbens 10. Zum Ausgleich von Volumendifferenzen beim Ein- und Ausfahren der Kolbenstange 12 kann z. B. der zweite Arbeitsraum 22 mit einem Speicher 24 verbunden sein. Die beiden Arbeitsräume 21, 22 und der Speicher 24 sind zumindest teilweise mit einem Druckmedium gefüllt.

Die beiden Arbeitsräume 21, 22 sind über mindestens eine Strömungsverbindung 26 miteinander verbunden. In der Strömungsverbindung 26 kann beispielsweise ein elektrisch ansteuerbares Magnetventil 28 vorgesehen sein. Über das Magnetventil 28 kann eine Androsselung des Druckmediums bei Strömung durch die Strömungsverbindung 26 beeinflußt werden. Das Magnetventil 28 ist über eine Leitung 32 mit einer in der ersten Masse 16 vorgesehenen Elektronik 30 verbunden und über die Elektronik 30 ansteuerbar. Zusätzlich zu der Strömungsverbindung 26 oder anstatt der Strömungsverbindung 26 können weitere Strömungsverbindungen 34 zur Verbindung der beiden Arbeitsräume 21, 22 vorgesehen sein. Innerhalb der weiteren Strömungsverbindungen 34 können z. B. Rückschlagventile 35 vorgesehen sein. Die Strömungsverbindung 26 und die weiteren Strömungsverbindungen 34 sind in dem dargestellten Ausführungsbeispiel innerhalb des Dämpferkolbens 10 angeordnet.

An einem Außenmantel 36 des Dämpferkolbens 10 ist eine Ringnut 38 vorgesehen. Innerhalb der Ringnut 38 befindet sich eine Meßspule 40. Die Meßspule 40 umfaßt zumindest eine Spule 42 und vorzugsweise auch noch einen Kern 44. Der Kern 44 besteht z. B. aus einem weichmagnetischen, hochpermeablen Material und umgibt die Spule 42 weitgehend, läßt jedoch die Spule 42 an einem dem Mantel 5 zugewandten Außenumfang frei. Die Spule 42 besteht vorzugsweise aus einem isolierten, mehrlagig gewickelten und elektrisch leitfähigen Draht. Die Spule 42 ist ebenfalls über eine Leitung 32 mit der Elektronik 30 verbunden. Der Kern 44 verbessert die Wirkung der Meßspule 40 deutlich.

Zusätzlich zu der Meßspule 40 oder anstatt der Meßspule 40 kann auch eine andere Meßspule 46 oder eine Meßspule 48 vorgesehen sein. Die andere Meßspule 46 ist am Dämpferkolben 10 auf der dem ersten Arbeitsraum 21 zugewandten Stirnseite angeordnet und die andere Meßspule 48 ist auf der dem zweiten Arbeitsraum 22 zugewandten Stirnseite des Dämpferkolbens 10 angeordnet. Die Meßspulen 46, 48 umfassen ebenfalls eine Spule 42 und einen Kern 44. Für das erfindungsgemäße Wegmeßsystem genügt prinzipiell eine Spule 42 und damit eine der Meßspulen 40, 46, 48 und man wird je nach Gegebenheiten nur eine der Meßspulen 40 oder 46 oder 48 so günstig wie möglich anordnen. Erläuterungen zur Meßspule 40 gelten auch für die anderen Meßspulen 46, 48.

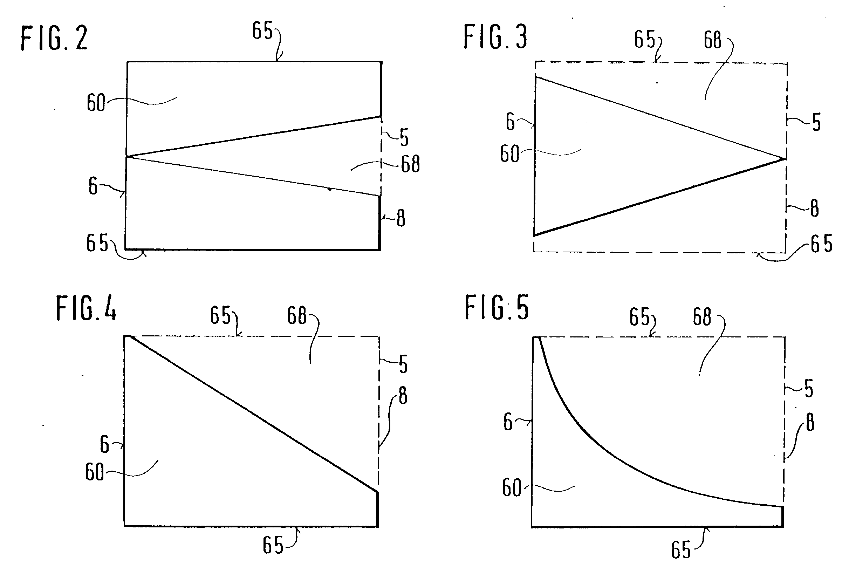

Der Mantel 5 des Zylinders 4 hat eine äußere Mantelfläche 54. An der äußeren Mantelfläche 54 des Zylinders 4 ist ein eine Induktivität der Spule 42 beeinflussendes Material 60 angeordnet. Wenn man gedanklich den Mantel 5 und das die Induktivität beeinflussende Material 60 entlang einer Mantellinie 65 auftrennt und gedanklich in einer Ebene den Mantel 5 und das Material 60 ausbreitet, so erhält man ein Rechteck mit vier Seiten. Zwei parallele Seiten 65 entsprechen der Mantellinie 65, an der das die Induktivität beeinflussende Material 60 und der Mantel 5 gedanklich aufgetrennt wurden. Die dritte Seite 6 des Rechtecks entspricht der ersten Stirnseite 6 und die vierte Seite 8 entspricht der zweiten Stirnseite 8. Der abgewickelt dargestellte Mantel 5 bildet das Rechteck und ist in den Figuren 2 bis 8 gestrichelt dargestellt. In den Figuren 2 bis 8 liegt auf dem in einer Ebene dargestellten Mantel 5 das mit durchgezogenen Linien dargestellte, die Induktivität der Spule 42 beeinflussende Material 60. In allen Figuren sind gleiche oder gleichwirkende Teile mit denselben Bezugszeichen versehen.

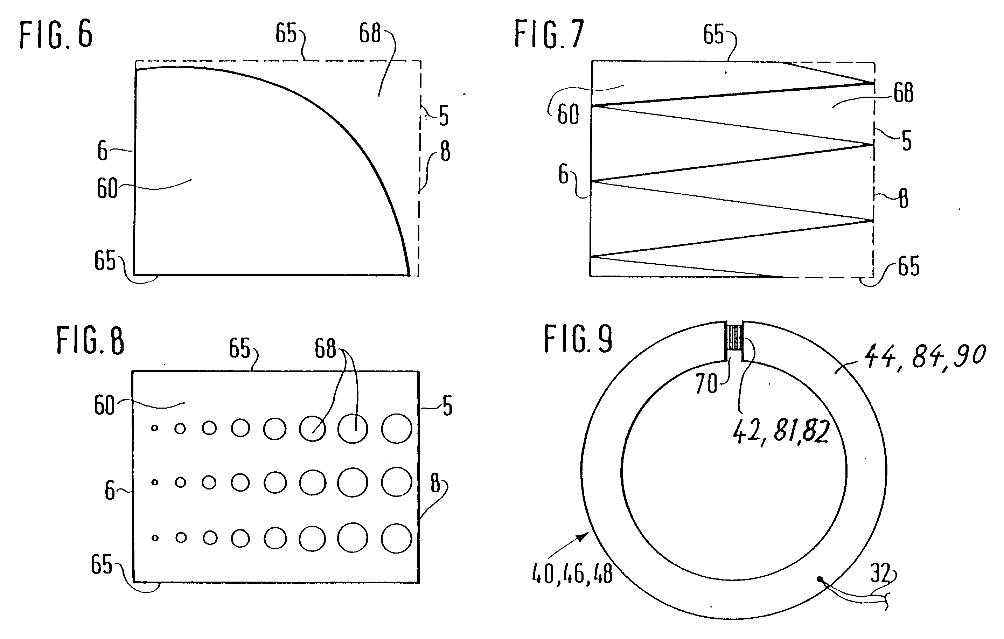

Das die Induktivität beeinflussende Material 60 ist kein vollständiges Rechteck, sondern es beinhaltet eine mehr oder weniger große Aussparung 68 oder mehrere Aussparungen 68. In der Figur 2 erstreckt sich die Aussparung 68, ausgehend von der zweiten Stirnseite 8, in axialer Richtung keilförmig in das Material 60 hinein. D.h. auf der Mantelfläche 54 des Zylinders 4 fehlt im Bereich der Aussparung 68 das die Induktivität beeinflussende Material 60. Im Bereich der ersten Stirnseite 6 umgibt das Material 60 den Zylinder 4 vollständig. Zur zweiten Stirnseite 8 hin wird die Aussparung 68 im Material 60 immer breiter und das Material 60 immer schmäler. Ebenso ist es in den Figuren 3 bis 7. In der Figur 2 umgibt das Material 60 den Mantel 5 des Zylinders 4 vollständig im Bereich der ersten Stirnseite 6. In der Figur 3 ist das die Induktivität beeinflussende Material 60 auch im Bereich der ersten Stirnseite 6 so schmal, daß es den Zylinder 4 nicht vollständig umgibt. Die Figur 4 entspricht weitgehend der Figur 2, nur sind in den beiden Figuren die gedachten Mantellinien 65 verschieden gelegt. In den Figuren 2 bis 4 und 7 besteht eine geradlinige Kante bzw. es bestehen geradlinige Kanten zwischen dem die Induktivität beeinflussenden Material 60 und der Aussparung 68. Wie die Figuren 5 und 6 zeigen, muß die Kante nicht unbedingt geradlinig verlaufen, sondern sie kann in geeigneter Weise gebogen sein. Je nachdem, ob die Empfindlichkeit des Wegmeßsystems im Bereich der ersten Stirnseite 6 oder im Bereich der zweiten Stirnseite 8 größer sein soll, wird man entweder eine Ausführung nach Figur 5 oder nach Figur 6 bevorzugen. Für die meisten Anwendungsfälle des erfindungsgemäßen Wegmeßsystems wird es besonders zweckmäßig sein, die Kante zwischen dem die Induktivität beeinflussenden Material 60 und der Aussparung so verlaufen zu lassen, daß die Induktivität der Meßspule 40 über den gesamten Meßbereich sich linear verändert. Dazu ist eine gekrümmte Kante erforderlich.

Es ist auch möglich, in dem die Induktivität beeinflussenden Material 60 mehrere Aussparungen 68 vorzusehen, wie es die Figuren 7 und 8 zeigen. Die Figur 8 ist besonders vorteilhaft, wenn mit dem erfindungsgemäßen Wegmeßsystem einzelne Schritte gemessen werden sollen.

Die Meßspule 40 ist in axialer Richtung, d. h. in Richtung eines Meßweges wesentlich kürzer als ein maximal möglicher Meßbereich. Das die Induktivität beeinflussende Material 60 erstreckt sich über mindestens den gesamten Meßbereich. Das beeinflussende Material 60 ist in den Figuren 2 bis 8 so dargestellt, daß im Bereich der ersten Stirnseite 6 mehr Material 60 und im Bereich der zweiten Stirnseite 8 weniger Material 60 vorhanden ist. Je nach Stellposition der Meßspule 40 bzw. der Spule 42 gegenüber dem Zylinder 4 ist der Einfluß des Materials 60 mehr oder weniger groß. Der Einfluß des die Induktivität beeinflussenden Materials 60 auf die Meßspule 40, das heißt auf die Spule 42 ist ein exaktes Maß für die Stellposition der Meßspule 40 gegenüber dem Material 60.

Sehr vorteilhaft ist folgende Werkstoffwahl: Das die Induktivität beeinflussende und die Struktur besitzende Material 60 ist beispielsweise ein Material, das eine gute elektrische Leitfähigkeit besitzt, aber nicht magnetisch ist bzw. eine kleine Permeabilität besitzt. Sehr geeignet für das Material 60 ist z. B. Kupfer oder Aluminium. Besonders zweckmäßig ist, wenn für den Mantel 5 zumindest im Meßbereich ein elektrisch schlecht leitendes und unmagnetisches Material verwendet wird, wie dies z. B. bei manchen hochlegierten Stählen der Fall ist. In diesem Fall ist die Induktivität der Meßspule 40 bzw. der Spule 42 relativ groß, wenn diese sich im Bereich der zweiten Stirnseite 8 befindet und die Induktivität der Meßspule 40 bzw. der Spule 42 ist relativ klein, wenn sie sich im Bereich der ersten Stirnseite 6 befindet. Da bei dem die Induktivität beeinflussenden Material 60 die Aussparung 68 entlang des Meßweges sich ständig ändert, kann jede beliebige Zwischen-Stellposition erfaßt werden. Bei Figur 8 erfolgt eine stufenweise Auflösung.

Ebenfalls sehr vorteilhaft ist nachfolgende Werkstoffwahl: Es besteht die Möglichkeit, für das die Induktivität beeinflussende Material 60 einen weichmagnetischen Werkstoff, d. h. einen Werkstoff mit hoher Permeabilität zu wählen, der gleichzeitig elektrisch schlecht leitet, wie es bei einer Reihe von magnetischen Werkstoffen der Fall ist. Auch hierbei ist es günstig, den Mantel 5 des Zylinders 4 aus einem Werkstoff mit schlechter elektrischer Leitfähigkeit zu fertigen, der auch gering magnetisch bzw. unmagnetisch ist. In diesem Fall ist die Induktivität der Spule 42 das heißt der Meßspule 40 relativ klein, wenn sie sich im Bereich der zweiten Stirnseite 8 befindet und nimmt laufend zu, je weiter sie sich in Richtung der ersten Stirnseite 6 bewegt. Auch hier ist das die Induktivität beeinflussende, strukturierte Material 60 z.B. entsprechend den Figuren 2 bis 8 gestaltet.

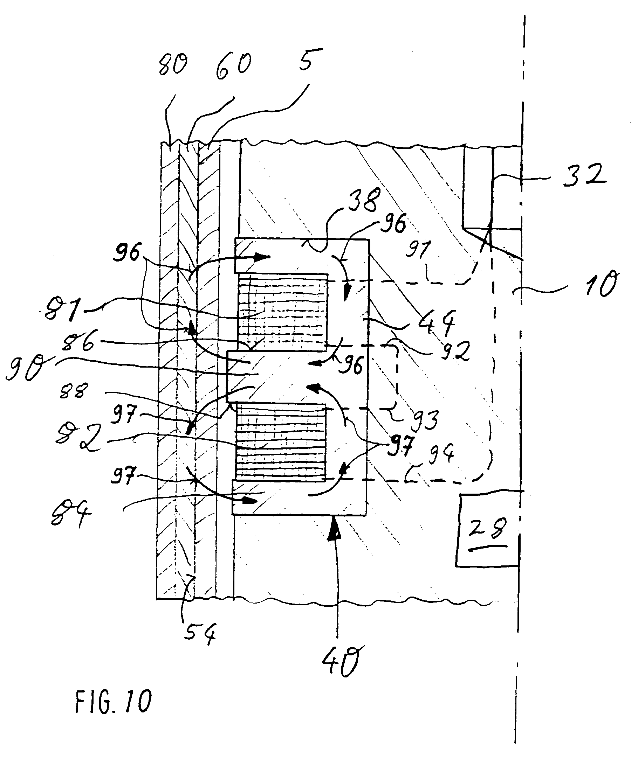

Die Figur 9 zeigt eine der Meßspulen 40, 46, 48 mit dem Kern 44 und der Spule 42. Dargestellt ist ein Blick stirnseitig auf die Meßspule 40, 46, 48 mit einem Teil der Leitung 32. Die Figur 9 zeigt eine besonders vorteilhafte Gestaltung der Meßspule 40, 46, 48. Hier ist der Kern 44 kein geschlossener Ring, sondern er hat an einer beliebigen Stelle einen Schlitz 70. Der Schlitz 70 verläuft einseitig quer durch den ringförmigen Kern 44. Der Schlitz 70 kann relativ schmal sein. Der Kern 44 besteht vorzugsweise aus einem hochpermeablen weichmagnetischen Material. Mit dem Schlitz 70 wird das Fließen von elektrischen Strömen in Umfangsrichtung in dem Kern 44 bzw. von Wirbelströmen wirksam verhindert. Damit ist der Einfluß des die Induktivität beeinflussenden Materials 60 auf die Meßspule 40 besonders intensiv.

Auf der der Meßspule 40 abgewandten Seite des die Induktivität dieser Meßspule 40 beeinflussenden Materials 60 ist gegebenenfalls ein weiteres Material 80 angeordnet. Ein ganz besonders guter Meßeffekt ergibt sich, wenn das strukturierte Material 60 eine besonders gute elektrische Leitfähigkeit bei geringer Permeabilität besitzt und das weitere Material 80 ein Material mit großer Permeabilität ist. Befindet sich die Meßspule 40 bzw. die Spule 42 im Bereich der ersten Stirnseite 6, so wird die Induktivität der Spule 42 im wesentlichen durch das strukturierte Material 60 beeinflußt. Da das strukturierte Material 60 eine gute elektrische Leitfähigkeit besitzt, wird durch dieses Material 60 die Induktivität der Spule 42 geschwächt. Wird die Spule 42, ausgehend von der ersten Stirnseite 6, in Richtung der zweiten Stirnseite 8 bewegt, so wird der Einfluß des strukturierten Materials 60 geringer und der Einfluß des weiteren Materials 80 wird größer, weil die Aussparung 68 in dem strukturierten Material 60 breiter wird. Wegen Wirbelströmen in dem strukturierten Material 60 kann das hochpermeable Material 80 nur im Bereich der Aussparung/Aussparungen 68 des strukturierten Materials 60 die Induktivität der Spule 42 bzw. der Meßspule 40 beeinflussen. Ist das weitere Material 80 vorhanden, so werden zwei Effekte addiert. Im Bereich der ersten Stirnseite 6 wird die Induktivität der Meßspule 40, d. h. der Spule 42 verkleinert und im Bereich der zweiten Stirnseite 8 wird die Induktivität der Spule 42 erhöht. Damit ergibt sich ein besonders guter Meßeffekt. Damit durch die Aussparung 68 in dem strukturierten Material zwischen dem Zylinder 4 und dem weiteren Material 80 sich kein Hohlraum bildet, kann die Aussparung 68 z. B. mit einem Harz ausgefüllt sein. Die beschriebene Kombination des Materials 60 mit dem Material 80 ist eine sehr vorteilhafte Weiterentwicklung des vorgestellten Wegmeßsystems.

Das strukturierte Material 60 kann z. B. ein über den Mantel 5 des Zylinders 4 übergestülptes, mit der Aussparung 68 bzw. den Aussparungen 68 versehenes Rohr sein. Bei dem strukturierten Material 60 kann es sich aber auch um ein entsprechend den Figuren 2 bis 8 geformtes und um den Zylinder zumindest teilweise herumgewickeltes Blech handeln. Das strukturierte Material 60 kann aber auch auf dem Zylinder 4 z. B. galvanisch aufgetragen sein. Auch jede andere Beschichtungsweise ist möglich. Der Mantel 5 dient als Grundmaterial für das strukturierte Material 60.

Das strukturierte Material 60 kann auch an der inneren Mantelfläche 14 des Zylinders 4 angeordnet sein. Die Anordnung des strukturierten Materials 60 an der äußeren Mantelfläche 54 hat jedoch den Vorteil, daß die innere Mantelfläche 14 in gewohnter Weise ausgebildet sein kann und sich hier z. B. keine Stufe bildet, welche zu Problemen bei der Abdichtung zwischen dem Dämpferkolben 10 und dem Zylinder 4 führen könnte. Das Vorhandensein des Mantels 5 des Zylinders 4 zwischen der Meßspule 40 und dem struktierten Material 60 hat den Vorteil, daß die Aussparung 68 beliebig gestaltet sein kann, ohne daß dies irgendwelche Einflüsse auf eine Festigkeit des Stoßdämpfers 2 haben könnte. Dies ist wichtig, weil innerhalb eines Stoßdämpfers teilweise sehr erhebliche Drücke auftreten.

Die Meßspule 40 und damit auch die Spule 42 sind Bestandteil des einen Körpers, und das strukturierte, die Induktivität der Spule 42 beeinflussende Material 60 und, falls vorhanden, das weitere, ebenfalls die Induktivität beeinflussende Material 80 ist Bestandteil des anderen Körpers.

Es ist auch möglich, das strukturierte Material 60 und das weitere Material 80 z. B. an oder innerhalb der Kolbenstange 12 und die Meßspule 40 z. B. an der ersten Stirnseite 6 im Bereich der Dichtung 15 anzuordnen. Da es sich hierbei um ein Äquivalent handelt, wird auf diese Variante nicht näher eingegangen.

Besonders vorteilhaft ist, daß, je nach Anordnung der Meßspule 40, nur zu einem der beiden, relativ zueinander bewegbaren Körper eine Leitung 32 geführt sein muß. Bei dem erfindungsgemäßen Wegmeßsystem hat ein nicht zu dem Wegmeßsystem gehörendes Magnetfeld, z.B. das Magnetfeld des Magnetventils 28 keinen oder nur einen geringen Einfluß auf die Spule 42, insbesondere wegen der besonders geschickten Gestaltung des die Spule 42 teilweise umhüllenden Kerns 44.

Um die Induktivität der Meßspule 40, bzw. der Spule 42 zu messen, gibt es mehrere Möglichkeiten. Die Spule 42 kann z. B. mit einer konstanten Spannung mit relativ hoher Frequenz gespeist werden und man mißt z. B. den durchfließenden Strom, wobei dieser ein Maß für die Induktivität der Spule 42 und damit für die Stellposition des einen Körpers gegenüber dem anderen Körper ist, d.h. in unserem Falle, des Dämpferkolbens 10 gegenüber dem Zylinder 4. Die Stellposition des Dämpferkolbens 10 ist ein wichtiges Maß z. B. für eine Ansteuerung des Magnetventils 28. Die Strömungsverbindung 26 mit dem Magnetventil 28 kann innerhalb des Dämpferkolbens 10 verlaufen, aber auch außerhalb des Dämpferkolbens kann die Strömungsverbindung 26 bzw. 34 die beiden Arbeitsräume 21, 22 miteinander verbinden.

Es ist in vorteilhafter Weise auch möglich, z. B. das Strukturierte Material 60 aus einem elektrisch gut leitenden, möglichst unmagnetischem Material zu fertigen und anstatt der Aussparung 68 ein elektrisch schlecht leitendes, aber hochpermeables Material innerhalb der Aussparung 68 vorzusehen. Dies ergibt ungefähr den gleichen Meßeffekt wie mit dem weiteren Material 80.

Die Länge der Meßspule 40 bzw. der Spule 42 in Bewegungsrichtung ist vorteilhafterweise deutlich kleiner als der Meßbereich. Das strukturierte Material 60 mit der Aussparung 68 bzw. den Aussparungen 68 und gegenbenenfalls das Material 80 ist in Bewegungsrichtung vorzugsweise so lang, daß ein von der Meßspule 40 ausgehendes Magnetfeld in keiner Stellposition mehr als unwesentlich über die beiden Endbereiche des Materials 60, 80 hinausreicht. Der Abstand zwischen der Spule 42 und dem Material 60, 80 sollte so sein, daß das Magnetfeld der Spule 42 noch meßtechnisch auswertbar geschnitten wird. Ein kleiner Abstand ist besonders günstig. Wegen dem erzielbaren guten Meßeffekt muß der Abstand andererseits nicht besonders klein sein, was einer einfachen Herstellbarkeit insbesondere des gesamten Stoßdämpfers sehr entgegenkommt.

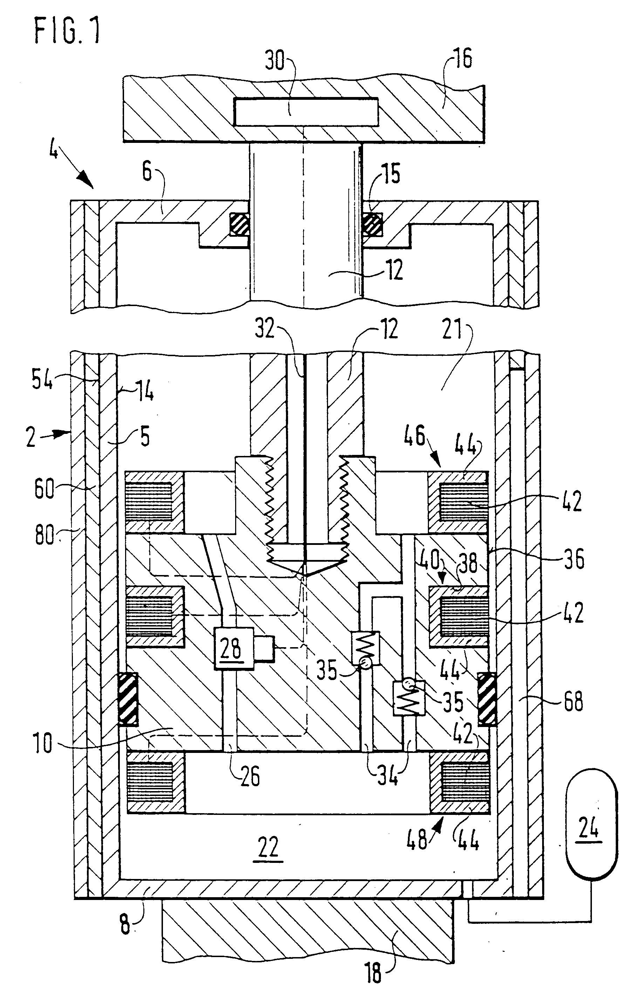

Die Figur 10 zeigt eine andere, besonders vorteilhafte Gestaltung der Meßspule 40. In Figur 10 ist in geändertem Maßstab ein Ausschnitt des in Figur 1 dargestellten Stoßdämpfers wiedergegeben. Bis auf die Meßspule 40 sind die übrigen Teile gleich wie in dem in Figur 1 dargestellten Ausführungsbeispiel.

In Figur 10 umfaßt die Meßspule 40 im wesentlichen eine erste Spule 81, eine zweite Spule 82 und einen Kern 84. An dem Kern 84 sind ein erster Einstich 86 und ein zweiter Einstich 88 vorgesehen. Die erste Spule 81 befindet sich innerhalb des ersten Einstichs 86, und die zweite Spule 82 befindet sich innerhalb des zweiten Einstichs 88. Zwischen den beiden Spulen 81, 82 bildet sich eine Trennwand 90. Die Trennwand 90 und der Kern 84 sind vorzugsweise ein Bauteil und bestehen aus dem gleichen Material wie es weiter vorne beim Kern 44 erläutert ist. Die Trennwand 90 kann aber auch aus einem separaten Bauteil bestehen und zwischen den beiden Spulen 81, 82 eingefügt sein. Die Trennwand 90 sollte mit dem Kern 84 eng verbunden sein. Die Trennwand 90 ist Bestandteil des Kerns 84. Der Kern 84 und die Trennwand 90 umgeben die Spulen 81, 82 weitgehend, lassen aber die Spulen 81, 82 an dem dem Mantel 5 zugewandten Außenumfang frei. Die Spulen 81, 82 sind weitgehend gleich aufgebaut wie die Spule 42.

Die Spulen 81, 82 bestehen vorzugsweise aus einem isolierten, mehrlagig gewickelten und elektrisch leitenden Draht. Jeder Draht hat je ein oberes Drahtende 91, 93 und je ein unteres Drahtende 92, 94; bezogen auf die Figur 10. Die Spulen 81, 82 sind so angeschlossen, daß sie in entgegengesetzter Richtung vom Strom beflossen werden. Dies läßt sich z. B. erreichen, wenn man, ausgehend vom oberen Drahtende 91 der ersten Spule 81 den Draht der ersten Spule 81 zunächst in einer Umfangsrichtung wickelt, das untere Drahtende 92 der ersten Spule 81 mit dem oberen Drahtende 93 der zweiten Spule 82 verbindet und dann den Draht der zweiten Spule 82 in umgekehrte Umfangsrichtung wickelt. Die beiden Drahtenden 91, 94 sind mit der Elektronik 30 verbunden.

Sind beide Spulen 81, 82 in gleichem Drehsinne gewickelt, so kann man auch hier erreichen, daß die beiden Spulen 81, 82 in entgegengesetzter Richtung stromdurchflossen sind, wenn man z. B. die beiden oberen Drahtenden 91, 93 mit der Elektronik 30 verbindet und das untere Drahtende 92 der ersten Spule 81 mit dem unteren Drahtende 94 der zweiten Spule 82 verbindet. Da diese Variante nur wenig von der in Figur 10 dargestellten Ausführungsform abweicht, ist diese Variante nicht in einer separaten Figur dargestellt.

Die beiden Spulen 81, 82 sind, bezogen auf den Meßweg, sehr dicht zusammen, so daß die Meßspule 40, auch wenn sie die zwei Spulen 81, 82 umfaßt, als eine Einheit betrachtet werden kann.

Ist das Wegmeßssystem z. B. in einem Stoßdämpfer angeordnet, so herrschen dort oft sehr beengte Einbauverhältnisse und es läßt sich meist nicht ganz vermeiden, daß irgendwelche magnetischen oder elektrischen Felder auf die Meßspule 40 einwirken. Derartige Felder können z. B. von dem Magnetventil 28 ausgehen. Trotz dem in Figur 1 dargestellten Kern 44 können diese Felder mehr oder weniger in der Spule 42 eine Spannung induzieren und auch den durch die Spule 42, fließenden elektrischen Strom beeinflussen. Sofern diese Felder nicht ausreichend mit Hilfe des Kerns 44 abgeschirmt werden können, haben diese Felder einen negativen Einfluß auf das Meßergebnis. Die Elektronik 30 kann nicht unterscheiden, ob eine Änderung der Spannung bzw. des Stromes in der Spule 42 von einer Verschiebung der Meßspule 40 oder von einem äußeren Feld herrührt.

Auch bei dem in Figur 10 dargestellten Ausführungsbeispiel können die magnetischen bzw. elektrischen von außen herrührenden Felder auf die Spulen 81, 82 einwirken. Da die beiden Spulen 81, 82 sehr dicht zusammenliegen, kann davon ausgegangen werden, daß beide Spulen 81, 82 von einem gleich starken magnetischen bzw. elektrischen Feld beeinflußt werden. Da beide Spulen 81,82 in entgegengesetzter Richtung stromdurchflossen sind, hat dies folgenden Effekt: Ist das äußere Feld so, daß in der ersten Spule 81 eine Verstärkung stattfindet, so ergibt sich zwangsweise in der zweiten Spule 82 eine gleich große Abschwächung des Meßsignals. Dies hat den Vorteil, daß auch ein noch so starkes von außen auf die Meßspule 40 einwirkendes magnetisches oder elektrisches Feld keinen Einfluß auf das Meßergebnis hat. Auch eine schnelle Änderung des magnetischen bzw. des elektrischen Feldes, z. B. beim Schalten des Magnetventils 28, hat ebenfalls keinen Einfluß auf das Meßergebnis.

Die Trennwand 90 besteht vorzugsweise ebenfalls aus einem weichmagnetischen, hochpermeablen Material. Da die erste Spule 81 durch die Trennwand 90 gegenüber der zweiten Spule 82 abgetrennt ist, kann die erste Spule 81 ihre Wirkung voll entfalten, ohne daß die Wirkung der ersten Spule 81 durch das Magnetfeld der zweiten Spule 82 auf nennenswerte Weise gemindert wird. In gleicher Weise verhält es sich mit der zweiten Spule 82, deren Wirksamkeit wegen der Trennwand 90 nicht von der ersten Spule 81 gemindert wird. Eine besonders günstige Gestaltung bekommt man, wenn man die Trennwand 90 so dünn wählt, daß die beiden Spulen 81, 82 möglichst dicht zusammenrücken, aber andererseits die Trennwand 90 so dick ausführt, daß die magnetische Sättigung der Trennwand 90 nicht überschritten wird, so daß die beiden Magnetfelder der beiden Spulen 81, 82 sich nicht oder zumindest nicht in störendem Maße gegenseitig teilweise aufheben. Die Trennwand 90 kann umso dünner dimensioniert sein, je stärker sich ihr Werkstoff magnetisieren läßt. Der Permeabilitätsfaktor dieses Werkstoffes sollte ausreichend groß sein.

In Figur 10 sind vier Pfeile 96 und vier Pfeile 97 eingezeichnet. Die Pfeile 96 symbolisieren das Magnetfeld der ersten Spule 81 und drehen in der Figur 10 beispielhalber im Uhrzeigersinn. Die Pfeile 97 symbolisieren das Magnetfeld der zweiten Spule 82 und drehen entgegen dem Uhrzeigersinn. Damit ergibt sich die vorteilhafte Wirkung, daß beide Magnetfelder im Bereich der Trennwand 90 in gleicher Richtung verlaufen.

Die beiden in Figur 10 dargestellten Spulen 81, 82 sind in Reihe, d. h. hintereinander geschaltet und haben zusammen in etwa die gleiche Wirkung wie die in Figur 1 dargestellte Spule 42, wenn die beiden Spulen 81, 82 zusammen die gleiche Länge an gewickeltem Draht aufweisen wie die eine Spule 42. Das heißt, bezogen auf ein Nutzsignal, haben die beiden Spulen 81, 82, sofern sie gemeinsam die gleiche Länge an gewickeltem Draht aufweisen wie eine einzige Spule 42, ungefähr die gleiche Wirkung. Bezogen auf die Beeinflußbarkeit durch störende äußere elektrische oder magnetische Felder ist die in Figur 10 dargestellte Ausführungsform der Meßspule 40 günstiger als die in Figur 1 dargestellte Ausführungsform der Meßspule 40.

Es ist auch möglich die Meßspule 40 mit einer zusätzlichen dritten Spule oder mit noch weiteren Spulen zu versehen. Am besten wird der Einfluß störender äußerer Felder ausgeschaltet, wenn die Spulen so dimensioniert sind, daß die inneren Magnetfelder je zur Hälfte in die eine Richtung und in die andere Richtung drehen.

Der in Figur 10 dargestellte Kern 84 mit der Trennwand 90 kann so, wie in Figur 9 dargestellt, ebenfalls an einer beliebigen Stelle durch den Schlitz 70 unterbrochen sein. Der Schlitz 70 verläuft einseitig quer durch den ringförmigen Kern 84 und durch die ringförmige Trennwand 90. Auch in diesem Fall wird wegen der Unterbrechung durch den Schlitz 70 das Fließen von elektrischen Strömen in Umfangsrichtung in dem Kern 84 bzw. in der Trennwand 90 wirksam verhindert.

Sofern bei der Beschreibung von Figur 10 nichts anderes erwähnt ist, gilt für die in Figur 10 dargestellte Meßspule 40 das gleiche wie weiter vorne bezüglich der in den Figuren 1 bzw. 9 dargestellten Meßspulen 40, 46, 48. Wenn nichts anderes angegeben, gilt für die Spulen 81,82 das gleiche wie für die Spule 42. Und für den Kern 84 mit der Trennwand 90 gilt das gleiche wie für den Kern 44.

## Patentansprüche

1. Wegmeßsystem für eine Einrichtung, insbesondere für eine Einrichtung mit einem Zylinder (4), mit zwei gegenseitig verschiebbaren Körpern (16, 18) zur Erfassung einer Stellposition des einen Körpers gegenüber dem anderen Körper innerhalb eines Meßbereiches in einer Bewegungsrichtung, wobei einer der Körper eine Meßspule (40) umfaßt und der andere Körper mit mindestens einem eine Induktivität der Meßspule beeinflussenden Material (60) versehen ist, dadurch gekennzeichnet, daß das beeinflussende Material (60) in der Bewegungsrichtung eine über mindestens den gesamten Meßbereich die Stellposition markierende Struktur besitzt, wobei die Meßspule (40) kürzer ist als der Meßbereich.

2. Wegmeßsystem nach Anspruch 1, dadurch gekennzeichnet, daß das beeinflussende Material (60) eine hohe elektrische Leitfähigkeit besitzt.

3. Wegmeßsystem nach Anspruch 1, dadurch gekennzeichnet, daß das die Struktur aufweisende Material (60) eine hohe Permeabilität besitzt.

4. Wegmeßsystem nach einem der vorherigen Ansprüche dadurch gekennzeichnet, daß die Meßspule (40) eine einzige Spule (42) umfaßt.

5. Wegmeßsystem nach einem der Ansprüche 1 bis 3, dadurch gekennzeichnet, daß die Meßspule (40) mindestens zwei in entgegengesetzter Richtung stromdurchflossene Spulen (81, 82) umfaßt.

6. Wegmeßsystem nach Anspruch 5, dadurch gekennzeichnet, daß an einem Kern (84) eine Trennwand (90) vorgesehen ist, zur Trennung der beiden Spulen (81, 82).

7. Wegmeßsystem nach Anspruch 6, dadurch gekennzeichnet, daß die Trennwand (90) aus einem magnetisierbaren Material besteht.

8. Wegmeßsystem nach einem der vorhergehenden Ansprüche, dadurch gekennzeichnet, daß das die Struktur besitzende Material (60) an einem Grundmaterial (5) angeordnet ist.

9. Wegmeßsystem nach Anspruch 8, dadurch gekennzeichnet, daß das die Struktur besitzende Material (60) auf einer der Meßspule (40) abgewandten Seite (54) des Grundmaterials (5) angeordnet ist.

10. Wegmeßsystem nach einem der Ansprüche 8 oder 9, dadurch gekennzeichnet, daß das Grundmaterial (5) eine elektrische Leitfähigkeit besitzt, die merkbar geringer ist als die elektrische Leitfähigkeit des die Struktur besitzenden Materials (60).

11. Wegmeßsystem nach einem der Ansprüche 8 bis 10, dadurch gekennzeichnet, daß das Grundmaterial (5) eine Permeabilität besitzt, die merkbar kleiner ist als die Permeabilität des die Struktur besitzenden Materials (60).

12. Wegmeßsystem nach einem der vorhergehenden Ansprüche, dadurch gekennzeichnet, daß das die Struktur besitzende Material (60) in mindestens zwei Bereiche unterteilt ist, wobei in dem einen Bereich eine elektrische Leitfähigkeit merkbar größer und eine Permeabilität merkbar kleiner ist als in dem jeweils anderen Bereich.

13. Wegmeßsystem nach einem der vorhergehenden Ansprüche, dadurch gekennzeichnet, daß auf einer der Meßspule (40) abgewandten Seite des die Struktur besitzenden Materials (60) ein weiteres Material (80) angeordnet ist.

14. Wegmeßsystem nach Anspruch 13, dadurch gekennzeichnet, daß das die Struktur besitzende Material (60) eine merkbar größere Leitfähigkeit und eine merkbar kleinere Permeabilität besitzt als das weitere Material (80).

15. Wegmeßsystem nach einem der vorhergehenden Ansprüche dadurch gekennzeichnet, daß die Meßspule (40) einen Kern (44, 84) besitzt, der mit einem seinen Umfang unterbrechenden Schlitz (70) versehen ist.

## Claims

1. Position measuring system for a device, in particular for a device with a cylinder (4), having two bodies (16, 18) which can be displaced with respect to one another for the purpose of detecting a set position of one body with respect to the other body within a measuring range in a direction of movement, one of the bodies comprising a measurement coil (40) and the other body being provided with at least one material (60) which influences an inductivity of the measurement coil, characterized in that the influencing material (60) has, in the direction of movement, a structure which marks the set position over at least the entire measuring range, the measurement coil (40) being shorter than the measuring range.

2. Position measuring system according to Claim 1, characterized in that the influencing material (60) has a high electrical conductivity.

3. Position measuring system according to Claim 1, characterized in that the material (60) which has the structure has a high permeability.

4. Position measuring system according to one of the preceding claims, characterized in that the measurement coil (40) comprises a single coil (42).

5. Position measuring system according to one of Claims 1 to 3, characterized in that the measurement coil (40) comprises at least two coils (81, 82) through which current flows in opposite directions.

6. Position measuring system according to Claim 5, characterized in that a dividing wall (90) is provided on a core (84) for the purpose of dividing the two coils (81, 82).

7. Position measuring system according to Claim 6, characterized in that the dividing wall (90) consists of a magnetizable material.

8. Position measuring system according to one of the preceding claims, characterized in that the material (60) which has the structure is arranged on a basic material (5).

9. Position measuring system according to Claim 8, characterized in that the material (60) which has the structure is arranged on a side (54), facing away from the measurement coil (40), of the basic material (5).

10. Position measuring system according to one of Claims 8 or 9, characterized in that the basic material (5) has an electrical conductivity which is appreciably less than the electrical conductivity of the material (60) which has the structure.

11. Position measuring system according to one of Claims 8 to 10, characterized in that the basic material (5) has a permeability which is appreciably less than the permeability of the material (60) which has the structure.

12. Position measuring system according to one of the preceding claims, characterized in that the material (60) which has the structure is divided into at least two areas, electrical conductivity being appreciably greater and permeability being appreciably less in one area than in the respective other area.

13. Position measuring system according to one of the preceding claims, characterized in that a further material (80) is arranged on a side, facing away from the measurement coil (40), of the material (60) which has the structure.

14. Position measuring system according to Claim 13, characterized in that the material (60) which has the structure has appreciably greater conductivity and appreciably less permeability than the further material (80).

15. Position measuring system according to one of the preceding claims, characterized in that the measurement coil (40) has a core (44, 84) which is provided with a slot (70) which interrupts its circumference.

## Revendications

1. Capteur de déplacement pour un dispositif, et en particulier un dispositif comportant un cylindre (4), avec deux corps (16,18) pouvant coulisser l'un par rapport à l'autre pour déterminer une position de réglage de l'un des corps par rapport à l'autre corps à l'intérieur d'une zone de mesure dans un sens de mouvement, l'un des corps comprenant une bobine de mesure (40) et l'autre corps étant pourvu d'au moins un matériau (60) influençant l'inductance de la bobine de mesure, capteur de déplacement caractérisé en ce que le matériau qui influence l'inductance (60) présente une structure marquant la position de réglage dans le sens du mouvement sur au moins toute la zone de mesure, la bobine de mesure (40) étant plus courte que la zone de mesure.

2. Capteur de déplacement selon la revendication 1, caractérisé en ce que le matériau qui influence l'inductance (60) possède une conductibilité électrique élevée.

3. Capteur de déplacement selon la revendication 1, caractérisé en ce que le matériau présentant la structure (60) possède une haute perméabilité.

4. Capteur de déplacement selon l'une des revendications précédentes, caractérisé en ce que la bobine de mesure (40) comprend une seule bobine (42).

5. Capteur de déplacement selon l'une des revendications 1 à 3, caractérisé en ce que la bobine de mesure (40) comprend au moins deux bobines (81,82) parcourues par le courant en sens opposés.

6. Capteur de déplacement selon la revendication 5, caractérisé en ce que l'on prévoit sur un noyau (84) une cloison de séparation (90) pour séparer les deux bobines (81,82).

7. Capteur de déplacement selon la revendication 6, caractérisé en ce que la cloison de séparation (90) consiste en un matériau pouvant être magnétisé.

8. Capteur de déplacement selon l'une des revendications précédentes, caractérisé en ce que le matériau présentant la structure (60) est disposé sur un matériau de base (5).

9. Capteur de déplacement selon la revendication 8, caractérisé en ce que le matériau présentant la structure (60) est disposé sur un côté (54) du matériau de base (5) situé à l'opposé de la bobine de mesure (40).

10. Capteur de déplacement selon l'une des revendications 8 ou 9, caractérisé en ce que le matériau de base (5) possède une conductibilité électrique notablement plus faible que la conductibilité électrique du matériau présentant la structure (60).

11. Capteur de déplacement selon l'une des revendications 8 à 10, caractérisé en ce que le matériau de base (5) possède une perméabilité notablement plus petite que la perméabilité du matériau présentant la structure (60).

12. Capteur de déplacement selon l'une des revendications précédentes, caractérisé en ce que le matériau présentant la structure (60) est subdivisé en au moins deux zones, étant entendu que dans une zone on a une conductibilité électrique notablement plus grande et une perméabilité notablement plus petite que dans l'autre zone respective.

13. Capteur de déplacement selon l'une des revendications précédentes, caractérisé en ce qu'un autre matériau (80) est disposé sur un côté, situe a l'opposé de l'une des bobines de mesure (40), du matériau présentant la structure (60).

14. Capteur de déplacement selon la revendication 13, caractérisé en ce que le matériau présentant la structure (60) possède une conductibilité notablement plus grande et une perméabilité notablement plus petite que l'autre matériau (80).

15. Capteur de déplacement selon l'une des revendications précédentes, caractérisé en ce que la bobine de mesure (40) possède un noyau (44,84) muni d'une fente (70) interrompant son pourtour.
